Europäisches Patentamt

European Patent Office

Office européen des brevets

(11) Publication number: **0 015 135**
**B1**

(12) **EUROPEAN PATENT SPECIFICATION**

(45) Date of publication of patent specification: **08.12.82**

(51) Int. Cl.³: **C 04 B 21/06, C 04 B 33/13**

(21) Application number: **80300472.0**

(22) Date of filing: **19.02.80**

(54) **Process for making heat insulating firebricks.**

(30) Priority: **20.02.79 JP 18898/79**

(43) Date of publication of application:
**03.09.80 Bulletin 80/18**

(45) Publication of the grant of the patent:
**08.12.82 Bulletin 82/49**

(84) Designated Contracting States:
**DE GB**

(56) References cited:
**DE - A - 1 925 467**
**DE - A - 2 243 85**
**CHEMICAL ABSTRACTS, vol. 88, 1978, page·
177, no. 65119g
Columbus, Ohio, U.S.A.**

**CHEMICAL ABSTRACTS, vol. 90, 1979, page
312, no. 59970c
Columbus, Ohio, U.S.A.**

(73) Proprietor: **Isolite Insulating Products Co., Ltd.
2-6, 1-chome
Dohjimahama Kita-ku, Osaka City (JP)**

(72) Inventor: **Horie, Eiji
76-1 Aza Hane, Ohaza Hagi Otowacho
Hoi-gun Aichi Prefecture (JP)**
Inventor: **Saeki, Takeo
1-2 Daidacho
Toyokawa Aichi Prefecture (JP)**
Inventor: **Oosawa, Shinichiro
2-18, 7-chome Zohshi
Toyokawa Aichi Prefecture (JP)**
Inventor: **Hisaka, Hideo
1-2 Daidacho
Toyokawa Aichi Prefecture (JP)**
Inventor: **Tanetani, Naoki
37, Higashiakawase
Toyokawa Aichi Prefecture (JP)**

(74) Representative: **Lawrence, Peter Robin Broughton
et al,
Gill, Jennings & Every 53-64 Chancery Lane
London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Process for making heat insulating firebricks

This invention relates to a process for making heat insulating firebricks and particularly light, heat insulating firebricks.

Heat insulating firebricks are conventionally made by a general manufacturing method in which a refractory clay is added to a highly refractory aggregate such as alumina, alumina silica, silicic acid, magnesia or zirconia, and to a pore making granular combustible substance such as wood chips, foamed polystyrene or coke. Sufficient water is added to the mixture to enable it to be moulded and then the mixture is kneaded or mixed, and is extruded, pressed or cast into bricks. The cast bricks are then dried and fired as required.

It is also known to generate the pores in the bricks using naphthalene in which bubbles or a foam are generated and added and in which a light refractory aggregate or a neutral diatomaceous earth is used. However, these manufacturing methods have both advantages and disadvantages.

The properties required of heat insulating firebricks are that they should have a low thermal conductivity, a low bulk specific gravity, a high strength to bulk specific gravity ratio, and to be capable of withstanding a high use temperature. If the shape, distribution and size of the pores, degree of sintering and chemical composition are the same, the lower the bulk specific gravity, the lower the thermal conductivity of a brick. Further, they should have a low shrinkage and deformation during the molding, drying and firing steps, the combustibles used as pore making agents should burn smoothly and their production rate should be high. However, there are many contradictions between these requirements and the characteristics of the manufacturing methods mean that no perfectly satisfactory method has yet been obtained.

The casting and moulding method using foamed polystyrene which is described in Japanese Patent Publication No 15232/35 published on October 13, 1960 is a good method of making light heat insulating firebricks. That is to say, foamed polystyrene has features that it has no water absorption and the bricks formed have a low water content during casting and moulding. Homogeneous products are easy to obtain since the polystyrene is spherical, and the bricks have a low shrinkage when fired and reheated. The required strength to bulk specific gravity ratio is easy to obtain and the calorific value of the foamed polystyrene is so low that the combustion control during firing is comparatively easy. However, this method has disadvantages in that although the water content is low for the casting and moulding it is still higher than in some other moulding methods and this leads to higher shrinkage on drying. Since the bricks can not be removed from the mould until they have some strength and this is not achieved until at least some of their water has been removed this takes a long while before they can be demoulded when the mould has no water absorption. Gypsum moulds are sometimes used which absorb water but these are less efficient than press-moulds and extrusion moulding techniques. Attempts have been made to harden the mixture with a gypsum, cement, size or resin, but large amounts of such material have been used, which vary the chemical composition of the bricks and have a bad influence on the drying and firing steps. Thus on drying the bricks made by this method are likely to become trapezoidal and distorted.

Particular methods of forming ceramic products are described in, for instance, DE - A - 1925467 and DE - A - 2243850.

According to this invention a heat insulating firebrick is made by moulding a mixture comprising a refractory aggregate, foamed polystyrene, inorganic binder including an alumina cement and water in an amount sufficient to permit the mixture to be moulded, followed by hardening of the moulded mixture, and in this process the alumina cement has an alumina content of from 8 to 75% by weight and is present in an amount of 1 to 15% based on the weight of the aggregate and inorganic binder, the water is present in an amount of below 50% based on the weight of the total mixture and the mixture includes also 0.1 to 0.3%, based on the total weight of the aggregate and inorganic binder, of a water soluble styrene maleic resin.

Examples of a process in accordance with this invention will now be described and contrasted with the prior art.

50 to 10 parts by weight of a fine powder (for example, of 100 mesh) of a refractory clay (which will serve as part of the inorganic binder) or the below mentioned refractory aggregate are mixed with 50 to 90 parts by weight of powdery granules (of about 28 mesh) of refractory aggregate or light aggregate such as of alumina, alumina silica, silicic acid, magnesia or zirconia. Further, an alumina cement capable of being hardened by reaction with a water-soluble styrene maleic resin is added to the mixture and the dry mixture is well mixed. The alumina cement to be used is a high alumina cement, alumina cement or jet cement having alumina content of from 8 to 75% by weight. Its kind and amount are determined depending on the influence on the chemical composition and the intended use of the heat insulating firebricks, the time required for the hardening and the amount of a water-soluble styrene maleic resin to be added later.

When a heat insulating firebrick of an alumina silica type is being prepared an alumina cement or high alumina cement is used and its amount must be between 3 and 1 parts by weight per 100 parts by weight of the total of the refractory aggregate and binder to keep the amount of CaO in the mixture as

2

# 0 015 135

small as possible. When a heat insulating firebrick of an alumina-silica-calcia type is being prepared by using an alumina silica type raw material, the amount of CaO does not have to be so limited but, if the amount of the alumina cement increases, the hardening time of the mixture becomes so short as to provide practical difficulties. Therefore about 15% by weight is the maximum that is normally added. However, if the CaO is provided from some other source and the hardening time is the only consideration then from 1 to 3% by weight is sufficient. When an alumina cement containing an amount of CaO of 40% by weight is used, the amont of CaO introduced by it into the heat insulating firebricks is only about 0.4 to 1.2% by weight and the influence of this on the quality of the heat insulating firebricks is very small. When it is required that as little as possible $Al_2O_3$ is introduced it is necessary to use a jet cement having a low $Al_2O_3$ content. The chemical compositions of alumina cements are shown in Table 1.

### TABLE 1

|  | $Al_2O_3$ | $SiO_2$ | $Fe_2O_3$ | CaO | MgO |
|---|---|---|---|---|---|
| Alumina Cement | 56 | 4.0 | 0.9 | 36 | 0.5 |
| High alumina cement | 73 | 0.2 | 0.2 | 26 | 0.1 |
| Jet Cement | 11 | 14 | 1.7 | 65 | 1.3 |

A granular foamed polystyrene pore making agent is then added to the mixture to provide a particular bulk specific gravity. A part of the foamed polystyrene may be replaced with bubbles, foam or wood chips. However, if the amount of water that is needed exceeds 90 to 100 parts by weight per 100 parts by weight of non aqueous mixture (45 to 50% by weight based on total mixture), the effect of the acceleration of the hardening by the addition of the alumina cement and water-soluble styrene maleic resin is not obtained.

Then, a water-soluble styrene maleic resin is added to the mixture of all the dry solids. This resin is added in a quantity so that it is from 0.1 to 0.3 parts by weight per 100 parts by weight of the total of the aggregate and binder and is dissolved in sufficient water to cast the mixture and the mixture is quickly kneaded. The kneaded mixture is cast into a prepared mould. This casting is allowed to harden for several minutes until it has sufficient green strength to allow it to be removed from the mould. When the amount of addition of the resin is less than the above mentioned 0.1 part by weight, its effect is low. When it is more than 0.1 parts by weight, the hardening time increases in proportion to the amount of addition of the resin. When it is substantially 0.3 parts by weight, the hardening time reaches a substantially constant value and further increases in the amount have little effect. The hardening time can be varied by adjusting the combination of the amounts of the alumina cement and resin and further by the addition of a hardening retarder or accelerator.

The thus obtained hardened brick has advantages in that is green strength builds up quickly so that it can be removed from the mould after a short time, therefore this process greatly improves the frequency of use of the mold. Thus bricks can be not only efficiently produced but the bricks are also lower in their shrinkage and deformation when dried than those made by any other method and even if the water content is not reduced at all, they can be fired. Further since the brick uses foamed polystyrene, a heat insulating firebrick is obtained which is low in shrinkage and deformation upon firing is comparatively easy to control in firing and has a high strength to bulk specific gravity ratio.

An example of a firebrick made in accordance with the process described is compared with conventional firebricks in the following tables.

A heat insulating firebrick was made in the above mentioned manner by using a raw material mixture shown in Table 2 and a wooden mould under manufacturing conditions shown in Table 3. The properties of the obtained heat insulating firebrick are shown in Table 4.

The water-soluble styrene maleic resin used was Sumirez Resin 2 (trade name) produced by the Sumitomo Chemical Co. Ltd.

Also the variations of the hardening time where the amount of addition of the alumina cement was varied under the same conditions as in this example are shown in Table 5 and the variations of the hardening time where the amount of addition of the resin was varied are shown in Table 6.

3

# 0015135

## TABLE 2

| Mixture | Example of present invention | Conventional example (1) | Conventional example (2) |
|---|---|---|---|
| Refractory chamotte (SK#32 to 34, 37% $Al_2O_3$ and 57% $SiO_2$ of a granularity of 28 meshes). | 75 kg | 75 kg | 50 kg |
| Refractory clay (Sk # 32) | 25 kg | 25 kg | 50 kg |
| Alumina cement (of 56% $Al_2O_3$ and 36% CaO) | 3 kg | — | — |
| Foamed polystyrene (of a granule diameter of 2 mm. and average bulk specific gravity of 0.015). | 250 l (3.7 kg) | 243 l (3.6 kg) | — |
| Wood chips (of not more than 2.4 mm. and a bulk of specific gravity of 0.20). | — | — | 400 (80 kg) |
| Water-soluble styrene maleic resin | 0.3 kg | — | — |
| Water | 46 l (30% by weight) | 55 l (35% by weight) | 130 l (42% by weight) |

## TABLE 3

| Manufacturing conditions | Example of present invention | Conventional example (1) | Conventional example (2) |
|---|---|---|---|
| Molding method | Casting | Casting | Vibration casting |
| Time (ratio) until the removal from the mold. | 6 minutes (1) | 16 hours (160) | 16 hours (160) |
| Drying time (ratio) | 16 hours (1) | 16 hours (1) | 48 hours (3) |
| Shrinkage (ratio) when dried | 0.5% (1) | 0.8% (1.6) | 3% (6) |
| Firing time (ratio). | 6 hours (1) | 6 hours (1) | 18 hours (3) |
| Shrinkage (ratio) when fired. | 6% (1) | 9% (1.5) | 12% (2) |
| Working | Required in some case | Required | Required |

TABLE 4

| Properties | Example of the present invention | Conventional example (1) | Conventional example (2) |
|---|---|---|---|
| Bulk specific gravity | 0.46 | 0.48 | 0.55 |
| Compressive strength in kg/cm² | 15 | 17 | 9 |
| Shrinkage in % when reheated | 0.41 | 0.39 | 0.82 |
| Chemical composition CaO in % | 1.3 | 0.3 | 0.3 |

TABLE 5

| Amount of alumina Cement | 2% | 3% | 4% | 5% |
|---|---|---|---|---|
| Hardening Time | 8 minutes | 6 minutes | 4 minutes | 3 minutes |

TABLE 6

| Amount of addition of resin | 0.1% | 0.2% | 0.3% | 0.4% | 0.5% |
|---|---|---|---|---|---|
| Hardening Time | 2 minutes | 4 minutes | 6 minutes | 6.3 minutes | 6.3 minutes |

## Claims

1. A process for making heat insulating firebricks comprising moulding a mixture comprising a refractory aggregate, granular foamed polystyrene, inorganic binder including an alumina cement and water in an amount sufficient to permit the mixture to be moulded, and hardening the moulded mixture, characterised in that the alumina cement has an alumina content of from 8 to 75% by weight and is present in an amount of 1 to 15% based on the total weight of the aggregate and inorganic binder, the water is present in an amount of below 50% based on the weight of the total mixture, and the mixture includes also 0.1 to 0.3% based on the total weight of the aggregate and inorganic binder, of a water soluble styrene maleic resin.

2. A process according to claim 1 characterised in that the amount of alumina cement is from 1 to 3% based on the total weight of aggregate and inorganic binder.

3. A method according to claim 1 or claim 2 characterised in that the mixture is formed by dry mixing inorganic binder, including alumina cement, with aggregate, mixing the granular foamed polystyrene into the mixture and then mixing into the mixture the resin and the water, and further characterised in that the mixture is moulded in a mould and is allowed to acquire green strength hardness, is removed from the mould and is allowed to harden further and is then fired.

**Revendications**

1. Procédé pour fabriquer des briques réfractaires thermiquement isolantes comprenant le moulage d'un mélange comprenant un agrégat réfractaire, du polystyrène expansé granulaire, un liant inorganique contenant un ciment d'aluminium et de l'eau en quantité suffisante pour permettre le moulage du mélange, et le durcissement du mélange moulé, caractérisé en ce que le ciment d'alumine a une teneur en alumine de 8 à 75% en poids et il est présent en quantité de 1 à 15%, par rapport au poids total de l'agrégat et du liant inorganique, l'eau est présente en quantité de moins de 50%, par rapport au poids du mélange total, et le mélange contient également 1 à 0,3%, par rapport au poids total de l'agrégat et du liant inorganique, d'une résine styrène-maléïque soluble dans l'eau.

2. Procédé selon la revendication 1, caractérisé en ce que la quantité de ciment d'alumine est de 1 à 3% par rapport au poids total de l'agrégat et du liant inorganique.

3. Procédé selon la revendication 1 ou la revendication 2, caractérisé en ce que l'on forme le mélange en mélangeant à sec le liant inorganique, contenant le ciment d'alumine, avec l'agrégat, en mélangeant le polystyrène expansé granulaire dans le mélange et en mélangeant ensuite dans le mélange la résine et l'eau, et caractérisé en outre en ce que le mélange est moulé dans un moule et on le laisse acquérir la dureté à l'état vert, on le retire du moule et on le laisse durcir encore, puis on le cuit.

**Patentansprüche**

1. Verfahren zum Herstellen wärmeisolierender, feuerfester Ziegel durch Bilden einer Mischung aus einer feuerfesten Substanz, granuliertem, geschäumtem Polystyrol und einem anorganischen, Aluminiumzement enthaltenden Bindemittel unter Zusatz einer für eine formbare Mischung ausreichenden Menge Wasser und Aushärten der ausgeformten Mischung, dadurch gekennzeichnet, daß der Aluminiumzement einen Aluminiumanteil von 8 bis 75 Gewichtsprozent hat und in einem Anteil von 1 bis 15% (Prozent), bezogen auf das Gesamtgewicht der feuerfesten Substanz und des anorganischen Bindemittels, vorhanden ist, daß Wasser in einer Menge von weniger als 50%, bezogen auf das Gewicht der gesamten Mischung, zugesetzt ist und daß die Mischung 0,1 bis 0,3%, bezogen auf das Gesamtgewicht von feuerfester Substanz und anorganischem Bindemittel, eines wasserlöslichen, maleinsauren Styrolharzes enthält.

2. Verfahren nach Anspruch 1, dadurch gekennzeichnet, daß der Anteil des Aluminiumzementes 1 bis 3%, bezogen auf das Gesamtgewicht von feuerfester Substanz und anorganischem Bindemittel, beträgt.

3. Verfahren nach Anspruch 1 oder 2, dadurch gekennzeichnet, daß die Mischung gebildet wird, indem das den Aluminiumzement enthaltende, anorganische Bindemittel mit der feuerfesten Substanz trocken gemischt wird, daß dann das granulierte, geschäumte Polystyrol eingemischt wird und daß dann das Harz und das Wasser eingemischt werden, und dadurch, daß die Mischung in einer Form geformt wird, aus dieser Form herausgenommen wird, nachdem sie Grünhärte angenommen hat, und, nachdem sie weitergehärtet ist, gebrannt wird.